# EUROPEAN PATENT APPLICATION

(11) **EP 2 369 759 A1**
(43) Date of publication of application: **28.09.2011**
(21) Application number: 09834357.7
(22) Date of filing: 16.12.2009
(51) Int. Cl.: H04B 7/15, H04M 3/00, H04W 24/02, H04W 92/20

(54) **SYSTEM AND DEVICE FOR MICROWAVE COMMUNICATION, AND METHOD OF CONNECTION FOR THE SYSTEM THEREOF**

(30) Priority: 24.12.2008 JP 2008328277
(71) Applicant: NEC Corporation, Minato-ku Tokyo 108-8001 (JP)
(72) Inventor: NISHIMURA, Tomotsune, Tokyo 108-8001 (JP)
(74) Representative: Glawe, Delfs, Moll
(86) International application number: PCT/JP2009/006926
(87) International publication number: WO 2010/073545

(57) **Abstract**

A microwave communication system which performs information communication between an indoor unit and outdoor units. A plurality of transmission units in the indoor unit are switchably connected to the outdoor units by means of a cross connect function, where each transmission unit has a two-way branch function. Typically, each of the transmission units manages an IP address of another transmission unit, and detects an adjacent transmission unit based on the IP address.

## Description

### TECHNICAL FIELD

The present invention relates to a microwave communication system and a corresponding apparatus for performing information communication between an indoor unit and an outdoor unit, and also relates to a connection method in the system.
Priority is claimed on Japanese Patent Application No. 2008-328277, filed December 24, 2008, the contents of which are incorporated herein by reference.

### BACKGROUND ART

A microwave communication system has been watched as a measure for interpolating between optical communication lines or wireless backbones, and can be applied to various targets. For example, the system can function as a substitute or backup device for a cellular phone network, inter-building communication, or an optical communication network. In recent years, cellular phone networks have been rapidly spread in a worldwide scale. Owing to advantages of the microwave communication system such as economy, easiness for construction, flexibility for system modification, and high capacity, demand for using the system as a communication system for connecting the base stations considerably increased.

Accompanied to the above, demand for high speed and wide area communication has also increased, so that provision of a lower-priced line service having a higher quality has been desired. In order to implement an economical communication apparatus, improvement in a digital cross connect (DXC) technique for connecting lines is indispensable, and each device should implement flexible cross connection (line setting and switching) for various line services. In the cross connection, even when there are data transmission lines having different forms corresponding to different usages or transmission speeds, the route to which a data signal is output can be switched.

Accompanied with complication for mobile networks, in a multiway branch station called a node station, the operator is requested to reduce CAPEX (capital expenditure) and OPEX (operating expense), and thus it is necessary to implement functions such as cross connection or multiway branch.

For the above circumstances, a multiway branch NE (network element) has been examined (see, for example, Patent Document 1). In the multiway branch NE. one IDU (indoor unit) has multiple ODUs (outdoor units).

### PRIOR ART DOCUMENT

### Patent Document

Patent Document 1: Japanese Unexamined Patent Application, First Publication No. 2002-94435.

### DISCLOSURE OF INVENTION

### Problem to be Solved by the Invention

However, the above-described multiway branch NE requires dedicated development, which causes an increase in the cost and time for such development. Additionally, in case of employing only a standard two-way NE connection, multiple NEs should be individually managed in monitoring and control of the relevant NMS (network management system).

In consideration of the problems derived from the above-described technique, the present invention relates to a microwave communication system for performing information communication between an indoor unit and an outdoor unit, and an object thereof is to provide a microwave communication system, a corresponding apparatus, and a connection method in the system, by which relatively easy management can be performed while reducing the relevant cost.

### Means for Solving the Problem

In order to achieve the above object, the present invention provides a microwave communication system which performs information communication between an indoor unit and outdoor units, wherein a plurality of transmission units in the indoor unit are switchably connected to the outdoor units by means of a cross connect function, where each transmission unit has a two-way branch function.
The present invention also provides a microwave communication apparatus which performs information communication together with outdoor units, and comprises a plurality of transmission units switchably connected to the outdoor units by means of a cross connect function, where each transmission unit has a two-way branch function.
The present invention also provides a connection method used in a microwave communication system which performs information communication, between an indoor unit and outdoor units, wherein the method comprises a step that switchably connects, in the indoor unit, a plurality of transmission units to the outdoor units by means of a cross connect function, where each transmission unit has a two-way branch function.
The present invention also provides a microwave communication method which performs information communication together with outdoor units, and comprises a step that switchably connects a plurality of transmission units to the outdoor units by means of a cross connect function, where each transmission unit has a two-way branch function.
In the above microwave communication system and apparatus, and also in the above methods, typically, each of the transmission units manages an IP address of another transmission unit, and detects an adjacent transmission unit based on the IP address.

### Effect of the Invention

As described above, in the present invention, a plurality of transmission units in an indoor unit are switchably connected to outdoor units by means of a cross connect function, where each transmission unit has a two-way branch function. Therefore, multiple NEs can be managed as one NE while reducing the relevant cost. In addition, when an abnormal state of the main signal is detected, the number of NEs managed in the NE group can be changed by a remote operation.

### BRIEF DESCRIPTION OF THE DRAWINGS

Fig. 1 is a diagram showing an embodiment of the microwave communication system of the present invention.
Fig. 2 is a diagram showing an example of a logical connection structure for the IDU 110 shown in Fig. 1.
Fig. 3 is a diagram showing an example of a physical connection structure for the IDU shown in Fig. 1.
Fig. 4 is a diagram showing a login sequence between an NMS and an IDU in the microwave communication system shown in Figs. 1 to 3.
Fig. 5 is a diagram showing a login sequence between the NMS and an IDU group in the microwave communication system shown in Figs. 1 to 3.
Fig. 6 is a diagram showing an example of an IDU setting picture shown at the NMS in Fig. 1.
Fig. 7 is a diagram showing a sequence performed when an abnormal state is detected in the microwave communication system shown in Figs. 1 to 3.
Fig. 8 is a diagram showing another example of the physical connection structure for the IDU shown in Fig. 1.

### MODE FOR CARRYING OUT THE INVENTION

Below, Embodiments of the present invention will be explained with reference to the drawings.

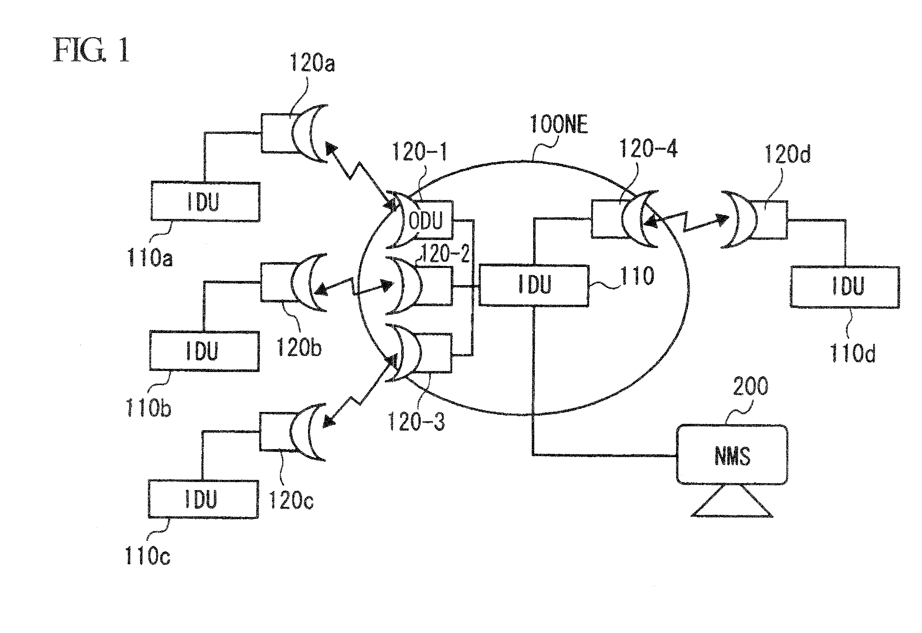

Fig. 1 is a diagram showing an embodiment of the microwave communication system of the present invention.

As shown in Fig. 1, the present embodiment employs a microwave communication system in which one NE (network element) 100 consists of an IDU (indoor unit) 110 (i.e., the indoor unit of the present invention), ODUs (outdoor units) 120-1 to 120-4 (i.e., the outdoor units of the present invention), a separating and mixing unit (HYB, not shown), and an antenna (not shown). The system is monitored and controlled by an NMS (network management system) 200 as a monitoring device.
The ODUs 120-1 to 120-4 perform wireless communication, and the IDU 110 performs signal transmission between the present NE and another NE by means of signal processing.
The present system may be connected to an optical network by mounting and setting an optical interface in the system.

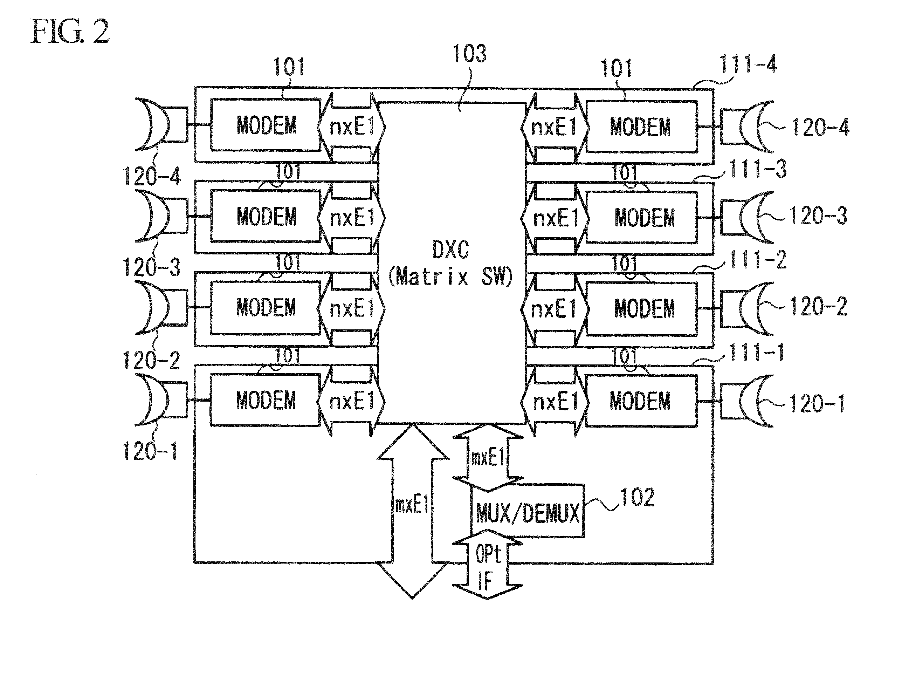

Fig. 2 is a diagram showing an example of a logical connection structure for an IDU shown in Fig. 1.

As shown in Fig. 2, in the IDU 110 of the present example, IDU 111-1 to 111-4 as transmission units are switchably connected by performing switching of an E/T signal or the like, which is input from a radio or optical port by means of a cross connect (XC) function.
The IDUs 111-1 to 111-4 are known practical devices and have a two-way branch function. The IDUs 111-1 to 111-4 are respectively connected to the ODUs 120-1 to 120-4, where each IDU is connected to two corresponding ODUs.
Also in the IDU 110, two models 101 are provided to each of the IDUs 111-1 to 111-4, and a MUX/DEMUX (multiplexer/demultiplexer) 102 and a DXC 103 are also provided. These devices are used for signal conversion, and wireless transmission and reception is performed by the ODUs 120-1 to 120-4.
The present structure also employs "Opt IF" (optical interface) and "E1 Tributary" (terminal station for an E1 line which has a data transmission speed of 2.048 Mbps).

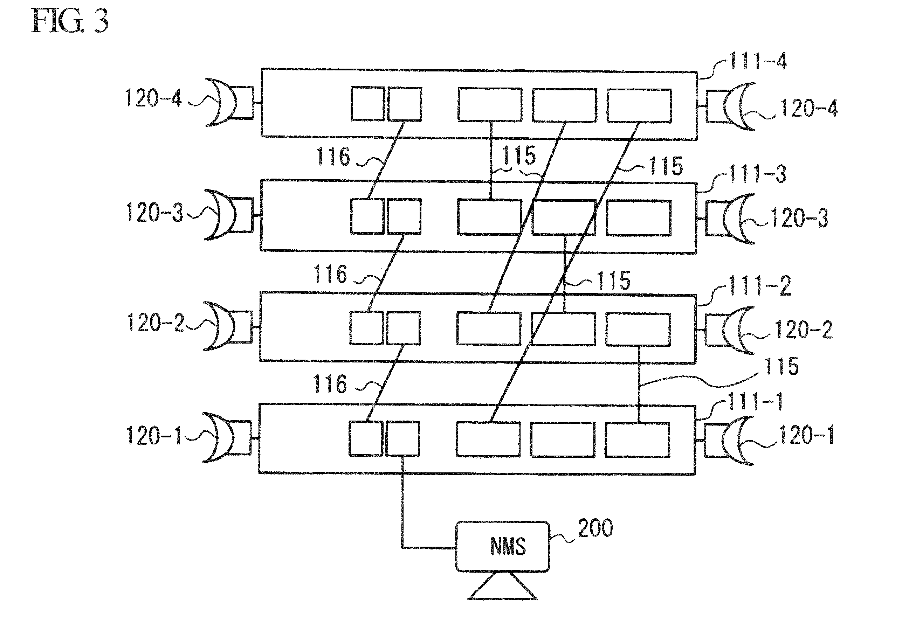

Fig. 3 is a diagram showing an example of a physical connection structure for the IDU 110 shown in Fig. 1.

As shown in Fig. 3, in the IDU 110 of the present example, IDUs 111-1 to 111-4 are connected via system cables 115 so as to implement a cross connect form, thereby performing inter-IDU main signal data monitoring (LOS (loss of signal), LOF, (loss of frame), and OOF (out of frame)), failure notification for connected IDUs, and inter-IDU cable missing monitoring.
The IDUs 111-1 to 111-4 are also connected via SV (supervisory) signal cables so as to implement monitoring and control by NMS200. In the area for wireless communication, an SV signal to be transmitted is multiplexed in a wireless frame of the main signal.
In the present example, four IDUs 111-1 to 111-4 are shown, which are known devices and practical devices having a two-way branch function. The IDUs 111-1 to 111-4 are respectively connected to the ODUs 120-1 to 120-4, where each IDU is connected to two corresponding ODUs.

As described above, a simplified extension is possible by connecting the IDUs 111-1 to 111-4 via dedicated system cables, thereby implementing a flexible network design using the cross connect and multiway signal branch functions.
In addition, the NMS 200 performs the monitoring and control of the IDU 111-1 to 111-4 included in the IDU 100, thereby improving the system's convenience.

Below, operation of the microwave communication system having the above-described operation will be explained.

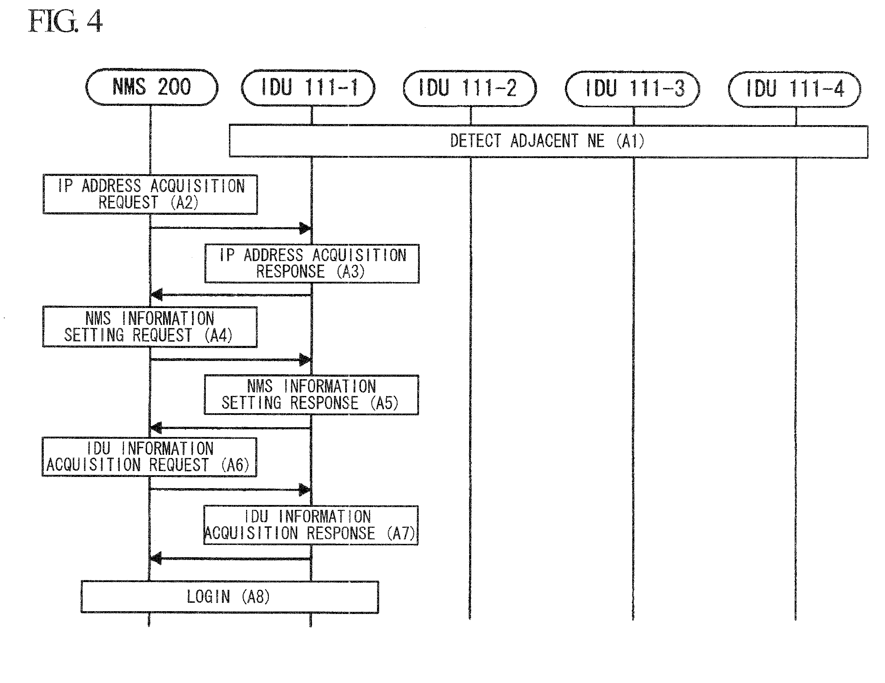

Fig. 4 is a diagram showing a login sequence between the NMS 200 and the IDU 111-1 in the microwave communication system shown in Figs. 1 to 3.

The IDUs 111-1 to 111-4 each detect and manage a primary IP address of an adjacent NE connected via a wireless or wired port (see step A1).
Here, respective IP addresses are assigned to the ports of the IDUs 111-1 to 111-4 in advance, where a primary IP address of each IDU (111-1 to 111-4) is selected from among the IP addresses of the ports.

The NMS 200 issues an IP address acquisition request to IDU 111-1, so that it acquires primary IP addresses and device types of the present NE (IDU 111-1) and an NE which faces IDU 111-1 via a wireless line (see steps A2 and A3).

Next, NMS200 sends an NMS information setting request to IDU 111-1, so that a connection status of NMS 200 and a timeout time for automatic disconnection of NMS 200 are set in IDU 111-1 (see steps A4 and A5).

After that, NMS200 sends an IDU information acquisition request to IDU 111-1, so that it acquires information for a device structure or the like managed in IDU 111-1, and the login operation is completed (see steps A6 to A8).

The above sequence is also effective when four NEs are not managed as one NE (i.e., when a conventional NE is managed as one NE).

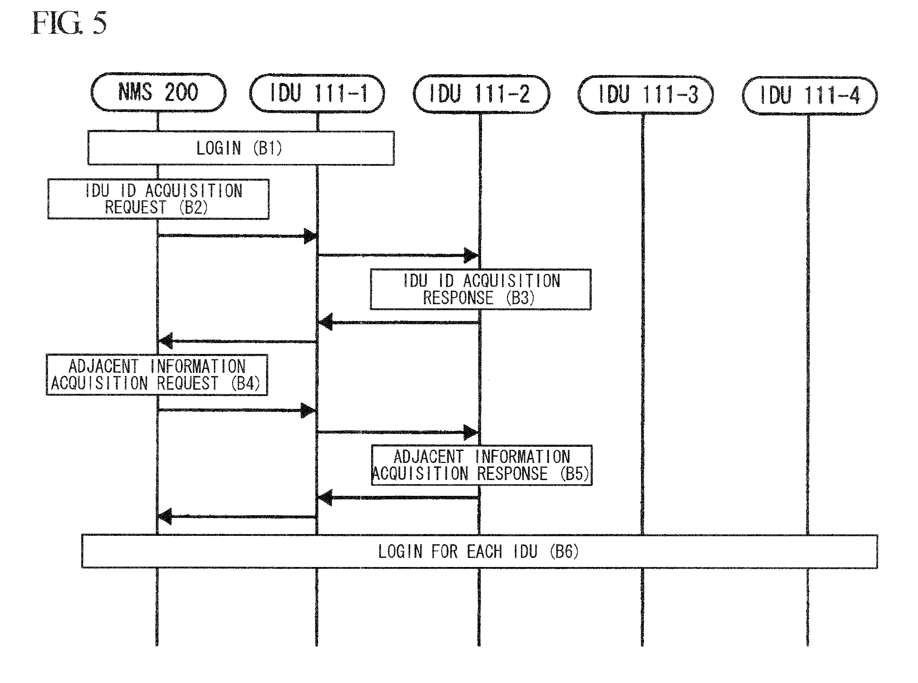

Fig. 5 is a diagram showing a login sequence between the NMS 200 and the IDUs 111-1 to 111-4 as an IDU group in the microwave communication system shown in Figs. 1 to 3.

Here, it is assumed that NMS 200 is being logged in IDU 111-1 (see step B1).
Here, the adjacent NE detection has been completed if NMS 200 is being logged in any one of IDUs 111-1 to 111-4. Therefore, the following sequence is effective regardless of the ID of the IDU.

The NMS 200 issues an IDU ID acquisition request to IDU 111-2, so that it acquires the number of IDUs in the relevant IDU group and an IDU ID of IDU 111-2 (see steps B2 and B3), where the number of IDUs and the IDU IS are predetermined.

Next, NMS 200 issues an adjacent information acquisition request to IDU 111-2, so that it acquires the primary IP address of the adjacent NE managed by step A1 in Fig. 4 (see step B4 and B5).

After that, to each of the IDUs having IDU IDs other than that of the present IDU (i.e., IDU 111-2), an NMS information setting request is issued similar to the process in steps A4 and A5, based on the number of IDUs, the IDU ID, and the primary IP address of the adjacent NE. Accordingly, the login for the IDUs 111-1 to 111-4 as the IDU group has been completed (see step B6).

The four NEs are managed as one NE by selecting (by NMS 200) a primary IP address for the IDU group from among the primary IP addresses of the IDUs 111-1 to 111-4. Therefore, during the management of the operation, the IDU group should be managed and controlled using the primary IP address of the IDU group.

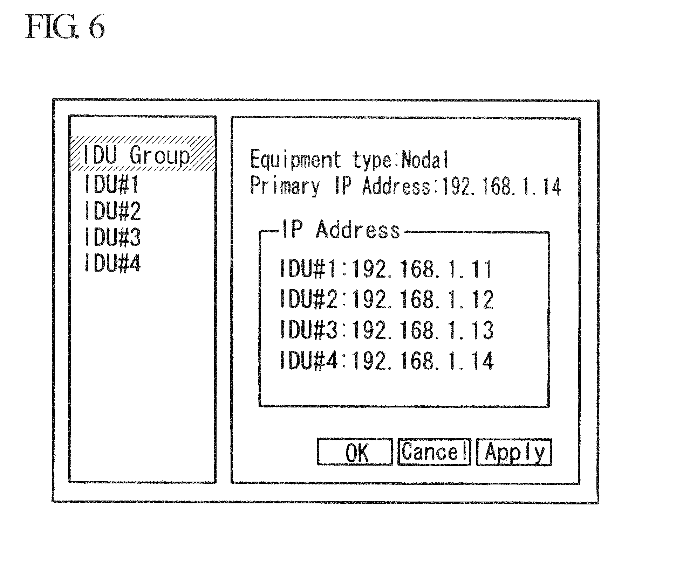

Fig. 6 is a diagram showing an example of an IDU setting picture shown at NMS 200 in Fig. 1.

In the example of Fig. 6 showing an IDU setting picture at NMS 200, the primary IP address of IDU 111-4 (#4) is determined to be the primary IP address of the IDU group, and the primary IP addresses of the IDUs 111-1 to 111-4 are also shown. The device structure information of IDUs 111-1 to 111-4 can be obtained by referring to a tree shown on the left side in the picture.

As described above, the multiple IDUs 111-1 to 111-4, which are standard devices having a two-way branch function, are used to form one NE, and the IDUs 111-1 to 111-4 as an IDU group are efficiently managed by NMS 200.

### Other embodiments

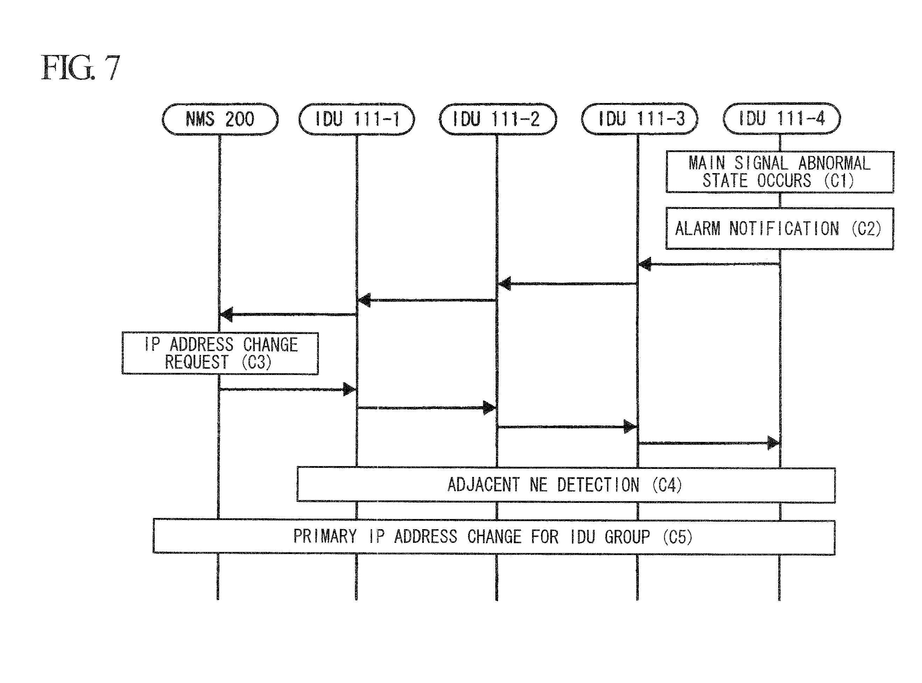

Fig. 7 is a diagram showing a sequence performed when an abnormal state is detected in the microwave communication system shown in Figs. 1 to 3.

For example, if IDU 111-4 detects an abnormal state relating to the main signal by means of the inter-IDU main signal data monitoring, the failure notification for connected IDUs, and the inter-IDU cable missing monitoring, the IDU 111-4 issues an alarm notification to NMS 200 via the SV signal cables 116 (see steps C1 and C2).

Then a change in the number of IDUs is assumed for a case in which it is determined that restoration is impossible due to a fatal trouble or the like. Therefore, NMS 200 issues an IP address change request so as to change the number of IDUs, the ID numbers of the IDUs 111-1 to 111-4, and the IP addresses assigned to the ports of the relevant IDUs (see step C3).

The IDUs 111-1 to 111-4 each perform the adjacent NE detection based on the newly selected primary IP address (see step C4).

In NMS 200, the primary IP address of the IDU group consisting of the IDUs 111-1 to 111-4 can be changed (see step C5).

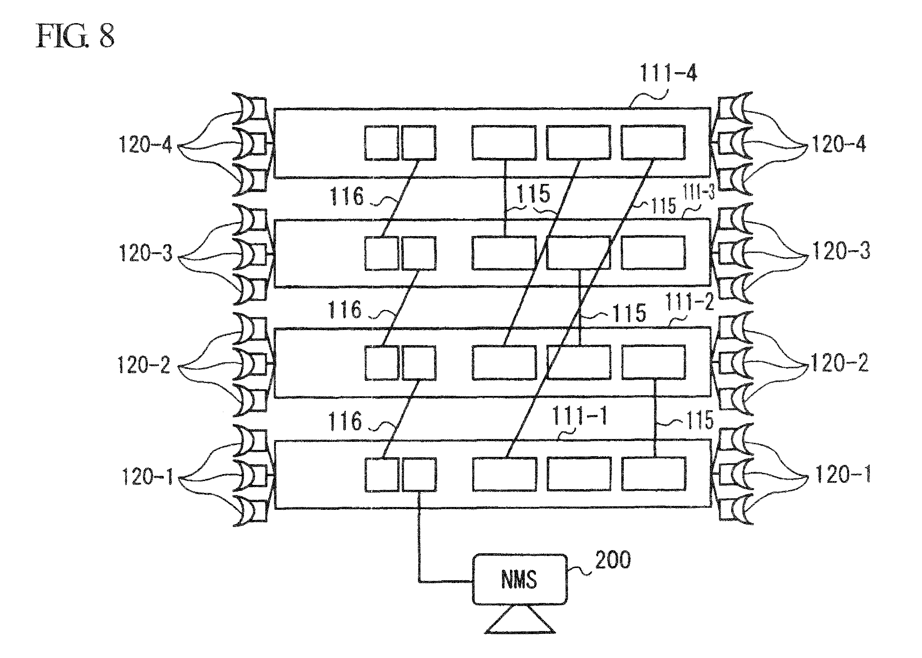

Fig. 8 is a diagram showing another example of the physical connection structure for the IDU 110 shown in Fig. 1.

In Fig. 8, when the IDUs 111-1 to 111-4, each having an improved multiway branch function (6-way in Fig. 8), are connected via system cables in a manner similar to Fig. 3, a further improved multiway function is implemented.

As described above, when the present invention is applied to a microwave communication system, a multiway signal branch using conventional NEs is possible. Since multiple NEs are managed by one NE by an NMS, the user operability and cost reduction can be anticipated.

### INDUSTRIAL APPLICABILITY

In the present invention, a plurality of transmission units in an indoor unit are switchably connected to outdoor units by means of a cross connect function, where each transmission unit has a two-way branch function. Therefore, multiple NEs can be managed as one NE while reducing the relevant cost. In addition, when an abnormal state of the main signal is detected, the number of NEs managed in the NE group can be changed by a remote operation.

### Reference Symbols

- 100: NE
- 101: MODEM
- 102: MUX/DEMUX
- 103: DXC
- 110, 110a to 110d, 111-1 to 111-4: IDU
- 115: system cable
- 116: SV signal cable
- 120-110 120-4, 120a to 120d: ODU
- 200: NMS

## Claims

1. A microwave communication system which performs information communication between an indoor unit and outdoor units, wherein:
a plurality of transmission units in the indoor unit are switchably connected to the outdoor units by means of a cross connect function, where each transmission unit has a two-way branch function.

2. The microwave communication system in accordance with claim 1, wherein:
each of the transmission units manages an IP address of another transmission unit, and detects an adjacent transmission unit based on the IP address.

3. The microwave communication system in accordance with claim 1, further comprising:
a monitoring device that is connected to the indoor unit, and monitors the indoor unit and the outdoor units; and
the monitoring device displays the transmission units which form the indoor unit.

4. The microwave communication system in accordance with claim 2, wherein:
one of the IP addresses managed by the transmission units is selected and managed as an IP address of a transmission unit group consisting of the transmission units.

5. A microwave communication apparatus which perform information communication together with outdoor units, and comprises:
a plurality of transmission units switchably connected to the outdoor units by means of a cross connect function, where each transmission unit has a two-way branch function.

6. The microwave communication apparatus in accordance with claim 5, wherein:
each of the transmission units manages an IP address of another transmission unit, and detects an adjacent transmission unit based on the IP address.

7. The microwave communication apparatus in accordance with claim 6, wherein:
one of the IP addresses managed by the transmission units is selected and managed as an IP address of a transmission unit group consisting of the transmission units.

8. A connection method used in a microwave communication system which performs information communication between an indoor unit and outdoor units, wherein the method comprises:
a step that switchably connects, in the indoor unit, a plurality of transmission units to the outdoor units by means of a cross connect function, where each transmission unit has a two-way branch function.

9. The connection method in accordance with claim 8, further comprising:
a step performed by each of the transmission units, wherein the step manages an IP address of another transmission unit and detects an adjacent transmission unit based on the IP address.

10. The connection method in accordance with claim 8, further comprising:
a step that displays the transmission units and monitors the indoor unit and the outdoor units.

11. The connection method in accordance with claim 9, further comprising:
a step that selects one of the IP addresses managed by the transmission units and manages the selected one as an IP address of a transmission unit group consisting of the transmission units.

12. A microwave communication method which performs information communication together with outdoor units, and comprises:
a step that switchably connects a plurality of transmission units to the outdoor units by means of a cross connect function, where each transmission unit has a two-way branch function.

13. The microwave communication method in accordance with claim 12, further comprising:
a step performed by each of the transmission units, wherein the step manages an IP address of another transmission unit and detects an adjacent transmission unit based on the IP address.

14. The microwave communication method in accordance with claim 13, further comprising:
a step that selects one of the IP addresses managed by the transmission units and manages the selected one as an IP address of a transmission unit group consisting of the transmission units.
